# EUROPÄISCHE PATENTANMELDUNG

(11) **EP 2 348 323 A1**
(43) Veröffentlichungstag der Anmeldung: **27.07.2011**
(21) Anmeldenummer: 10194461.9
(22) Anmeldetag: 10.12.2010
(51) Int. Cl.: G01P 21/02, G07C 5/08

(54) **Verfahren zum Betreiben eines Tachographen und Tachograph**

(30) Priorität: 17.12.2009 DE 102009058989
(71) Anmelder: Continental Automotive GmbH, 30165 Hannover (DE)
(72) Erfinder: Kimmich, Franz, 78713, Schramberg (DE); Wolf, Peter, 78078, Niedereschach (DE); Klostermeier, Dieter, 78050, Villingen-Schwenningen (DE)

(57) **Zusammenfassung**

Verfahren zum Betreiben eines Tachographen (DCO) der mit zumindest einem Sensor (S) über jeweils zumindest eine Signalleitung (SDL) koppelbar ist. Daten werden über die jeweilige zumindest eine Signalleitung (SDL) als pulsförmige, digitale Datensignale (S_D) übertragen. Ein Spannungspegel des jeweiligen Datensignals (S_D) wird zyklisch erfasst und Signalflanken des jeweiligen Datensignals (S_D) werden erfasst. Abhängig von den erfassten Signalflanken wird eine Signalflankenhäufigkeitskenngröße (PAR) ermittelt. Abhängig von dem erfassten Spannungspegel und der ermittelten Signalflankenhäufigkeitskenngröße (PAR) wird auf einen fehlerbehafteten Sensor (S) und/oder eine unterbrochene jeweilige Signalleitung (SDL) erkannt.

## Beschreibung

Verfahren zum Betreiben eines Tachographen und Tachograph

Die Erfindung betrifft ein Verfahren zum Betreiben eines Tachographen und einen Tachographen, der mit zumindest einem Sensor elektrisch koppelbar ist.

Fahrtenschreiber oder Tachographen können Kontrollgeräte sein, die dafür vorgesehen sind, in einem Kraftfahrzeug, insbesondere in einem Güter- oder Fahrgäste-Transportfahrzeug, installiert zu werden, um eine Überwachung der Aktivitäten eines Fahrers und/oder Beifahrers des Fahrzeugs zu ermöglichen. Dabei kann durch den Tachographen eine Aufzeichnung und Verarbeitung von Fahrzeugbetriebsparametern, insbesondere von Geschwindigkeiten, erfolgen. Dabei können beispielsweise Geschwindigkeitsdaten mittels Bewegungssensoren übermittelt werden.

Die Aufgabe, die der Erfindung zugrunde liegt, ist es, ein Verfahren zum Betreiben eines Tachographen und einen Tachographen zu schaffen, das bzw. der eine schnelle Fehlererkennung ermöglicht. Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich aus durch ein Verfahren zum Betreiben eines Tachographen und einen korrespondierenden Tachographen, der mit zumindest einem Sensor über jeweils zumindest eine Signalleitung koppelbar ist. Daten werden über die jeweilige zumindest eine Signalleitung als pulsförmige, digitale Datensignale übertragen. Dabei wird ein Spannungspegel des jeweiligen Datensignals zyklisch erfasst und es werden Signalflanken des jeweiligen Datensignals erfasst. Abhängig von den erfassten Signalflanken wird eine Signalflankenhäufigkeitskenngröße ermittelt. Abhängig von dem erfassten Spannungspegel und der ermittelten Signalflankenhäufigkeitskenngröße wird auf einen fehlerbehafteten Sensor und/oder eine unterbrochene jeweilige Signalleitung erkannt. Dies ermöglicht eine besonders schnelle Detektierung einer Unterbrechung der jeweiligen Signalleitung und/oder des fehlerbehafteten Sensors. Vorzugsweise repräsentiert die Signalflankenhäufigkeitskenngröße eine Häufigkeit von erfassten Signalflanken, so z. B. von fallenden und/oder steigenden Signalflanken. Einer des zumindest einen Sensors kann beispielsweise als Geschwindigkeitssensor ausgebildet sein.

In einer vorteilhaften Ausgestaltung wird auf den fehlerbehafteten Sensor und/oder die unterbrochene jeweilige Signalleitung erkannt, wenn der erfasste Spannungspegel des jeweiligen Datensignals für eine vorgegebene Zeitdauer in einem vorgegebenen Spannungsbereich liegt und die Signalflankenhäufigkeitskenngröße ein Ausbleiben von Signalflanken charakterisiert. Durch eine Berücksichtigung des Spannungspegels und der Signalflankenhäufigkeitskenngröße kann zuverlässig auf die Unterbrechung der Signalleitung und/oder auf den fehlerbehafteten Sensor erkannt werden.

In einer weiteren vorteilhaften Ausgestaltung wird ein vorgegebener Zählerstand um einen vorgegebenen Wert entweder inkrementiert oder dekrementiert, wenn der aktuelle erfasste Spannungspegel in dem vorgegebenen Spannungsbereich liegt. Der aktuelle Zählerstand wird mit einem vorgegebenen Zählerstandsschwellenwert verglichen. Abhängig von dem Vergleich wird die Signalflankenhäufigkeitskenngröße ermittelt. Auf den fehlerbehafteten Sensor und/oder die unterbrochene jeweilige Signalleitung wird erkannt, wenn die Signalflankenhäufigkeitskenngröße das Ausbleiben von Signalflanken charakterisiert. Dies ermöglicht eine zuverlässige Fehler- und/oder Unterbrechungserkennung.

Ausführungsbeispiele der Erfindung sind im Folgenden anhand der schematischen Zeichnungen näher erläutert. Es zeigen:
- Fig. 1: eine schematische Darstellung eines Tachographen mit Sensor,
- Fig. 2: Zeitdiagramme,
- Fig. 3: ein Ablaufdiagramm.

Elemente gleicher Konstruktion oder Funktion sind figurenübergreifend mit den gleichen Bezugszeichen versehen.

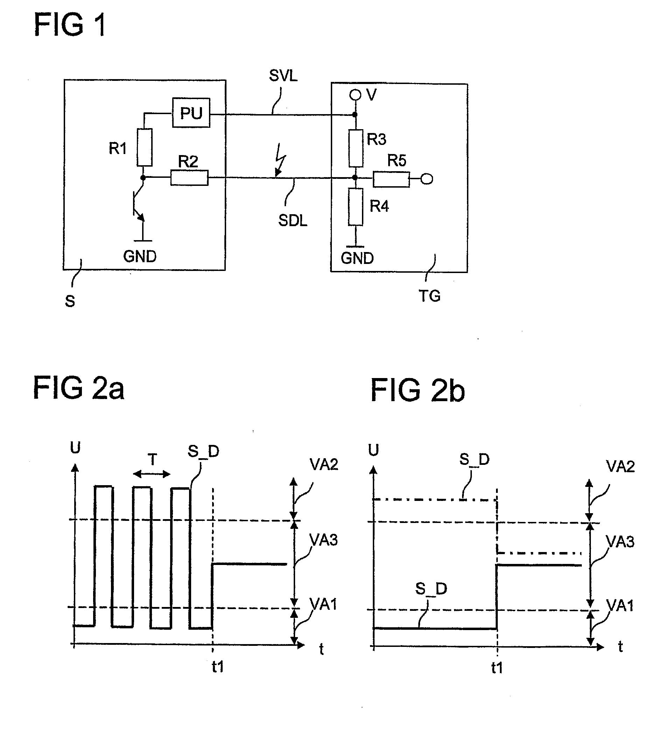

In Fig. 1 ist ein Tachograph TG und ein Sensor S für ein Kraftfahrzeug dargestellt. Der Sensor S ist über eine Signalleitung SDL und eine Versorgungsleitung SVL mit dem Tachographen TG elektrisch gekoppelt. Mittels der Versorgungsleitung SVL wird der Sensor S mit einer vorgegebenen Versorgungsspannung V versorgt, so z. B. 5 V. Der Sensor S kann auch unabhängig von dem Tachographen TG versorgt werden. Mittels der Signalleitung SDL werden pulsförmige, digitale Datensignale S_D von dem Sensor S an den Tachographen TG übertragen. Die Datensignale S_D sind repräsentativ für eine von dem Sensor S erfasste Größe, so z. B. eine Geschwindigkeit des Kraftfahrzeugs.

Die Signalleitung SDL ist auf Seiten des Sensors S beispielsweise als verdrahtete Und-Verknüpfung (Wired-AND) realisiert und mittels eines ersten Pullup-Widerstands R1 mit der Versorgungsleitung SVL elektrisch gekoppelt. Zwischen dem ersten Pullup-Widerstand R1 und der Versorgungsleitung SVL ist vorzugsweise eine Schutzeinheit PU elektrisch angeordnet, die beispielsweise eine Spule umfasst oder als solche ausgebildet ist. Der erste Pullup-Widerstand R1 ist mittels eines Koppelwiderstandes R2 mit der Signalleitung SDL gekoppelt.

Auf Seiten des Tachographen TG ist die Signalleitung SDL beispielsweise mit einem zweiten Pullup-Widerstand R3 an der vorgegebenen Versorgungsspannung V und mit einem Pulldown-Widerstand R4 mit einem Bezugspotential GND, so z. B. ein Massepotential des Kraftfahrzeugs, elektrisch gekoppelt. Zwischen einem gemeinsamen Anschluss des zweiten Pullup-Widerstands R3 und des Pulldown-Widerstands R4 wird über einen weiteren Widerstand R5 ein aktueller Spannungspegel U auf der Signalleitung SDL erfasst.

Tritt beispielsweise eine Unterbrechung der Signalleitung SDL auf, so resultiert aufgrund eines Spannungsteilers, der typischerweise aus dem zweiten Pullup-Widerstand R3 und dem Pulldown-Widerstand R4 gebildet ist, ein Spannungspegel U auf der Signalleitung SDL, der in einem vorgegebenen Spannungsbereich liegt. Tritt alternativ oder zusätzlich beispielsweise ein Fehler in der Schutzeinheit PU des Sensors S auf, so dass der erste Pullup-Widerstand R1 von der Versorgungsleitung SVL hochohmig entkoppelt ist, so resultiert typischerweise aufgrund der Widerstände R2-R5, die mit der Signalleitung SDL gekoppelt sind, ein Spannungspegel U auf der Signalleitung SDL, der auch in dem vorgegebenen Spannungsbereich liegt. Der vorgegebene Spannungsbereich kann beispielsweise zwischen 1 V und 4 V liegen und als verbotener Spannungsbereich VA_3 bezeichnet werden. Des Weiteren sind ein erster erlaubter Spannungsbereich VA_1, so z. B. zwischen 0 bis 1 V, und ein zweiter erlaubter Spannungsbereich VA_2, so z. B. zwischen 4 bis 5 V vorgegeben. Liegt der Spannungspegel U des Datensignals S_D in dem ersten erlaubten Spannungsbereich VA_1, so repräsentiert dies beispielsweise eine logische Null. Liegt der Spannungspegel U des Datensignals S_D in dem zweiten erlaubten Spannungsbereich VA_2, so repräsentiert dies beispielsweise eine logische Eins. Der erste und zweite erlaubte Spannungsbereich VA_1, VA_2 repräsentieren somit jeweils einen definierten Zustand des Datensignals S_D.

Der Fehler der Schutzeinheit PU und/oder weitere Fehler des Sensors S, die beispielsweise zu einer Unterbrechung einer elektrischen Kopplung zwischen der Versorgungsleitung SVL und der Signalleitung SDL führen, können auch als interne Sensorfehler bezeichnet werden.

In einem ersten und zweiten Zeitdiagramm (Fig. 2a, 2b) ist das Datensignal S_D dargestellt, wie es von dem Tachographen TG erfasst wird. Bis zu einem Zeitpunkt t1 nimmt das Datensignal S_D definierte Zustände ein. So ist es bis zu dem Zeitpunkt t1 beispielsweise möglich, eine Periodendauer T des Datensignals S_D zu erfassen (Fig. 2a), so z. B. zwischen zwei aufeinanderfolgenden steigenden Flanken des Datensignals S_D, und davon abhängig eine Frequenz des Datensignals S_D zu ermitteln. Die ermittelte Frequenz ist dann beispielsweise repräsentativ für die von dem Sensor S erfasste Geschwindigkeit des Kraftfahrzeugs.

Werden bis zu dem Zeitpunkt t1 keine Flanken des Datensignals S_D erfasst und weist das Datensignal S_D weiterhin einen der definierten Zustände auf (Fig. 2b), so wird beispielsweise auf ein stehendes Fahrzeug erkannt.

Zu dem Zeitpunkt t1 tritt beispielsweise eine Unterbrechung der Signalleitung SDL auf, so dass ab dem Zeitpunkt t1 der Spannungspegel U des Datensignals S_D zumindest für eine Dauer der Unterbrechung in dem verbotenen Spannungsbereich VA_3 liegt. Ferner werden ab dem Zeitpunkt t1 keine Signalflanken des Datensignals S_D mehr erfasst, insbesondere auch nicht bei einem fahrenden Kraftfahrzeug. Ein Auftreten des internen Sensorfehlers zu dem Zeitpunkt t1 würde zu einem korrespondierenden Verhalten führen.

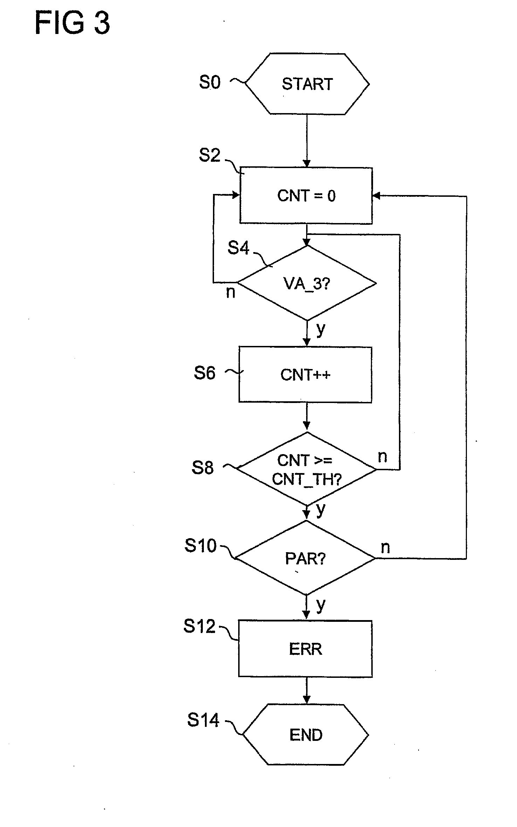

Anhand eines Ablaufdiagramms (Fig. 3) wird ein Verfahren zum Betreiben des Tachographen TG erläutert. Das Verfahren wird beispielsweise als ein in dem Tachographen TG gespeichertes Programm mittels einer Steuereinheit, so z. B. einem Mikrocontroller, des Tachographen ausgeführt.

Das Programm wird in einem Schritt S0 gestartet. In einem Schritt S2 wird einem Zählerstand CNT, beispielsweise eines Zählers der Steuereinheit, ein Neutralwert, so z. B. Null, vorgegeben. In einem Schritt S4 wird überprüft, ob der Spannungspegel U das Datensignals S_D in dem verbotenen Spannungsbereich VA_3 liegt. Ist dies nicht der Fall, wird das Programm erneut in dem Schritt S2 ausgeführt. Andernfalls wird in einem Schritt S6 der Zählerstand CNT um einen vorgegebenen Wert, so z. B. 1, inkrementiert. In einem Schritt S8 wird überprüft, ob der aktuelle Zählerstand CNT größer oder gleich einem vorgegebenen Zählerstandschwellenwert CNT_TH ist, so z. B. 4. Ist dies nicht der Fall, wird das Programm in dem Schritt S4 erneut ausgeführt. Andernfalls wird ein Schritt S10 ausgeführt, in dem eine Signalflankenhäufigkeitskenngröße PAR ermittelt wird. Diese repräsentiert vorzugsweise eine Häufigkeit der Signalflanken des Datensignals S_D für eine vorgegebene Zeitdauer. Repräsentiert die Signalflankenhäufigkeitskenngröße PAR ein Ausbleiben von Signalflanken des Datensignals S_D, so wird in einem Schritt S12 ein Fehlerzustand ERR vorgegeben und somit auf die Unterbrechung der Signalleitung SDL und/oder einen internen Sensorfehler erkannt. Werden in dem Schritt S10 Signalflanken ermittelt, wird der Schritt S2 erneut ausgeführt. In einem Schritt S14 wird das Programm beendet oder alternativ in dem Schritt S2 erneut ausgeführt.

Mittels des Programms kann die Unterbrechung der Signalleitung SDL und/oder der interne Fehler schnell erkannt werden, so z. B. innerhalb einer Zeitdauer von 100 bis 500 ms. Ferner kann der detektierte Fehlerzustand ERR schnell an übergeordnete Systeme des Kraftfahrzeugs übermittelt werden, so z. B. an einen Fahrzeugführungsrechner.

## Patentansprüche

1. Verfahren zum Betreiben eines Tachographen (DCO) der mit zumindest einem Sensor (S) über jeweils zumindest eine Signalleitung (SDL) koppelbar ist, wobei Daten über die jeweilige zumindest eine Signalleitung (SDL) als pulsförmige, digitale Datensignale (S D) übertragen werden, bei dem
- ein Spannungspegel (U) des jeweiligen Datensignals (S_D) zyklisch erfasst wird,
- Signalflanken des jeweiligen Datensignals (S_D) erfasst werden,
- abhängig von den erfassten Signalflanken eine Signalflankenhäufigkeitskenngröße (PAR) ermittelt wird,
- abhängig von dem erfassten Spannungspegel (U) und der ermittelten Signalflankenhäufigkeitskenngröße (PAR) auf einen fehlerbehafteten Sensor (S) und/oder eine unterbrochene jeweilige Signalleitung (SDL) erkannt wird.

2. Verfahren nach Anspruch 1, bei dem auf den fehlerbehafteten Sensor (S) und/oder die unterbrochene jeweilige Signalleitung (SDL) erkannt wird, wenn der erfasste Spannungspegel (U) des jeweiligen Datensignals (S D) für eine vorgegebene Zeitdauer in einem vorgegebenen Spannungsbereich liegt und die Signalflankenhäufigkeitskenngröße (PAR) ein Ausbleiben von Signalflanken charakterisiert.

3. Verfahren nach Anspruch 2, bei dem
- ein vorgegebener Zählerstand (CNT) um einen vorgegebenen Wert entweder inkrementiert oder dekrementiert wird, wenn der aktuell erfasste Spannungspegel (U) in dem vorgegebenen Spannungsbereich liegt,
- der aktuelle Zählerstand (CNT) mit einem vorgegebenen Zählerschwellenwert (CNT TH) verglichen wird,
- abhängig von dem Vergleich die Signalflankenhäufigkeitskenngröße (PAR) vermittelt wird,
- auf den fehlerbehafteten Sensor (S) und/oder die unterbrochene jeweilige Signalleitung (SDL) erkannt wird, wenn die Signalflankenhäufigkeitskenngröße (PAR) das Ausbleiben von Signalflanken charakterisiert.

4. Tachograph (DCO) der mit zumindest einem Sensor (S) über jeweils zumindest eine Signalleitung (SDL) koppelbar ist, wobei Daten über die jeweilige Signalleitung (SDL) als pulsförmige, digitale Datensignale (S_D) übertragen werden, wobei der Tachograph ausgebildet ist,
- einen Spannungspegel (U) des jeweiligen Datensignals (S_D) zyklisch zu erfassen,
- Signalflanken des jeweiligen Datensignals (S_D) zu erfassen,
- abhängig von den erfassten Signalflanken eine Signalflankenhäufigkeitskenngröße (PAR) zu ermitteln,
- abhängig von dem erfassten Spannungspegel (U) und der ermittelten Signalflankenhäufigkeitskenngröße (PAR) auf einen fehlerbehafteten Sensor (S) und/oder eine unterbrochene jeweilige Signalleitung (SDL) zu erkennen.
